# EUROPEAN PATENT SPECIFICATION

(11) **EP 3 112 591 B1**
(45) Date of publication and mention of the grant of the patent: **27.12.2017**
(21) Application number: 16177557.2
(22) Date of filing: 01.07.2016
(51) Int. Cl.: F01D 5/14, F01D 5/22, F04D 29/16, F04D 29/32, F01D 11/02, F02K 3/065, F01D 5/30, F02K 3/02

(54) **TIP SHROUDED HIGH ASPECT RATIO COMPRESSOR STAGE**
VERDICHTER MIT UMMANTELTER SPITZE MIT HOHER ASPEKTVERHÄLTNISSTUFE
ÉTAGE DE COMPRESSEUR CARÉNÉ DE POINTE À RAPPORT D'ASPECT ÉLEVÉ

(30) Priority: 01.07.2015 US 201514789295
(43) Date of publication of application: 04.01.2017
(73) Proprietor: United Technologies Corporation, Farmington, CT 06032 (US)
(72) Inventor: EPSTEIN, Alan H., Lexington, MA 02421 (US); SUCIU, Gabriel L., Glastonbury, CT 06033 (US); CHANDLER, Jesse M., South Windsor, CT 06074 (US)
(74) Representative: Iceton, Greg James

(56) References cited:
- EP-A2- 1 083 299
- WO-A1-2007/031408
- US-A- 980 563
- US-A- 3 048 365
- US-A- 3 314 652

## Description

### BACKGROUND

This disclosure relates to a tip shrouded compressor stage. In one aspect of this disclosure, the compressor blades have a high aspect ratio.

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The radial length or height of a compressor airfoil is set to give sufficient annulus area to pass the desired airflow. The blade chord is set by requirements of aeromechanics and compressor stability. The aspect ratio (span to chord ratio) of compressor airfoils is thus a result of these considerations. Aspect ratio has significantly decreased over the decades, from 3-4 in the 1950's to 1.2-1.4 for modern compressor airfoils. Lower aspect ratio blades with longer chords are attractive because they are more resistant to many aeromechanical problems which plagued earlier engines and are more resistant to compressor stability problems.

Compressor stages using a tip shroud have been used in the past. These compressor stages used a continuous, unbroken shroud, which had undesirable performance in some ways. EP1083299 discloses a turbine blade shrouded tip comprising an airfoil with an aspect ratio of about 3. WO 2007/031408, US 3,048,365, US 3,314,652 and US 980,563 relate to turbo machinery.

### SUMMARY

In one exemplary embodiment, a gas turbine engine compressor stage includes a rotor. Compressor blades are supported by the rotor. The blades include an inner flow path surface each supporting an airfoil that has a chord that extends radially along a span to a tip. A shroud is supported at the tip and provides an outer flow path surface. The shroud provides a noncontiguous ring about the compressor stage. The airfoils have an aspect ratio corresponding to the airfoil span to the airfoil chord. The shroud extends the full chord. The aspect ratio is in a range of 1.6 to 2.8.

In a further embodiment of any of the above, the shroud includes a sealing structure on a side of the shroud opposite of the outer flow path surface.

In a further embodiment of any of the above, the sealing structure has labyrinth seals.

In a further embodiment of any of the above, the blades each include a root received in a slot in the rotor.

In a further embodiment of any of the above, the shroud includes ring segments circumferentially spaced apart from one another and separated by gaps. Multiple blades share a common ring segment.

In a further embodiment of any of the above, blades are integrated with the rotor.

In another exemplary embodiment, a gas turbine engine includes an engine static structure. First and second turbine sections are rotatable about an axis relative to the engine static structure. The first turbine section is arranged fluidly downstream from the second turbine section. First and second compressor sections are rotatable about the axis relative to the engine static structure. The second compressor section is arranged fluidly downstream from the first compressor section. One of the compressor sections has a predetermined number of compressor stages. Each compressor stage has compressor blades supported by a rotor. The blades include an inner flow path surface each supporting an airfoil that has a chord that extends radially along a span to a tip. A shroud is supported at the tip and provides an outer flow path surface and a sealing structure. The sealing structure is configured to seal relative to the engine static structure. The shroud is provided on each of the compressor stages within the one of the compressor sections.

In a further embodiment of any of the above, the first and second compressor sections are respectively low and high pressure compressor sections rotatable relative to one another about the axis. The compressor stage is arranged in the high pressure compressor section.

In a further embodiment of any of the above, the engine static structure provides a core flow path and a bypass flow path. A fan is arranged in the bypass flow path upstream from the core flow path. The first and second compressor sections and the second and first turbine section are arranged in the core flow path.

In a further embodiment of any of the above, the sealing structure has labyrinth seals.

In a further embodiment of any of the above, the blades each include a root received in a slot in the rotor.

In a further embodiment of any of the above, the shroud includes ring segments circumferentially spaced apart from one another and separated by gaps. Multiple blades share a common ring segment.

In a further embodiment of any of the above, the blades are integrated with the rotor.

In a further embodiment of any of the above, the airfoils have an aspect ratio that corresponds to the airfoil span to the airfoil chord. The aspect ratio is in a range of 1.6 to 2.8.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a schematic view of a compressor section of the engine shown in Figure 1.
Figure 2A is a perspective view of an airfoil illustrating aspect ratio.
Figure 3 is a perspective view of one compressor stage embodiment of the compressor section shown in Figure 2.
Figure 4 is a perspective view of another compressor stage embodiment of the compressor section shown in Figure 2.
Figure 5 is a perspective view of another compressor stage embodiment of the compressor section shown in Figure 2.
Figure 5A another perspective view of the compressor stage shown in Figure 5A.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

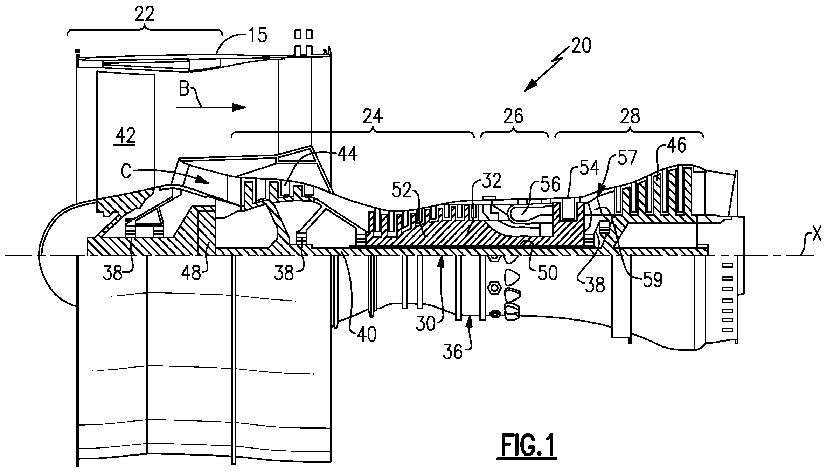

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 meters/second).

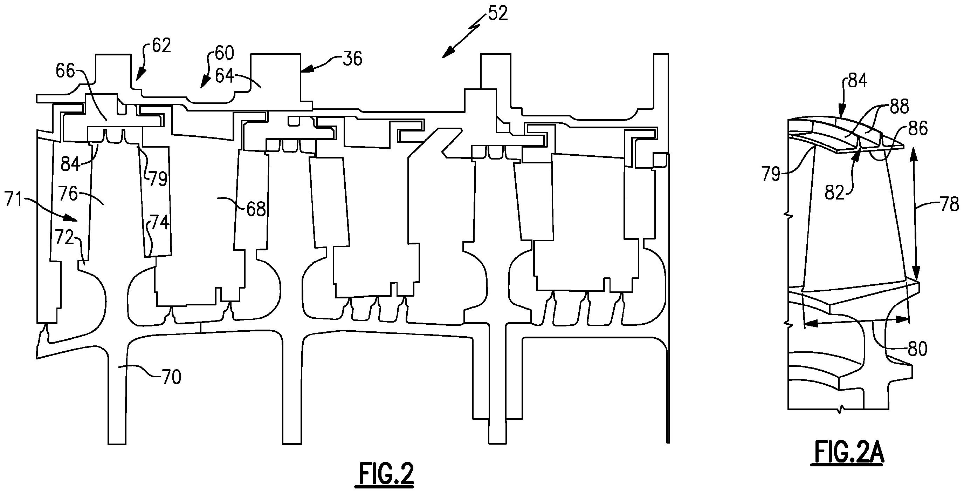

One example high pressure compressor section 52 is shown in Figure 2. However, it should be understood that the disclosed shrouded compressor section can also be used in the low pressure compressor section. The compressor section includes axially alternating fixed and rotating stages 60, 62. The engine static structure 36 includes outer case structure 64 that supports stationary seal structure 66, such as honeycomb. The honeycomb seals with respect to blades 71 in the rotating stages 62. Vanes 68 are supported by the outer case structure 64 in the fixed stages.

Each compressor stage includes blades 71 supported by a rotor 70. The blades 71 include an inner flow path surface 74 provided by platforms 72. Airfoils 76 extend radially a span 78 from the inner flow path surface 74 to a tip 79. Referring to Figures 2 and 2A, the airfoils 71 have a width from a leading edge to a trailing edge corresponding to a chord 80. The span 78 to the chord 80, at the base of the airfoil 71 at the platform 72, is referred to as the "aspect ratio." According to the invention the aspect ratio is in a range of 1.6 to 2.8.

The compressor stage includes a shroud 82 supported at the tip 82 and extends the full chord 80, which improves efficiency. The shroud 82 provides an outer flow path surface 86 at an inner diameter and a sealing structure 84 at an outer diameter. The sealing structure 84 seals relative to the seal structure 66 using, for example, labyrinth seals 88. In the example, each of the rotating compressor stages within the compressor section has the shroud 84 to provide an efficient compressor section.

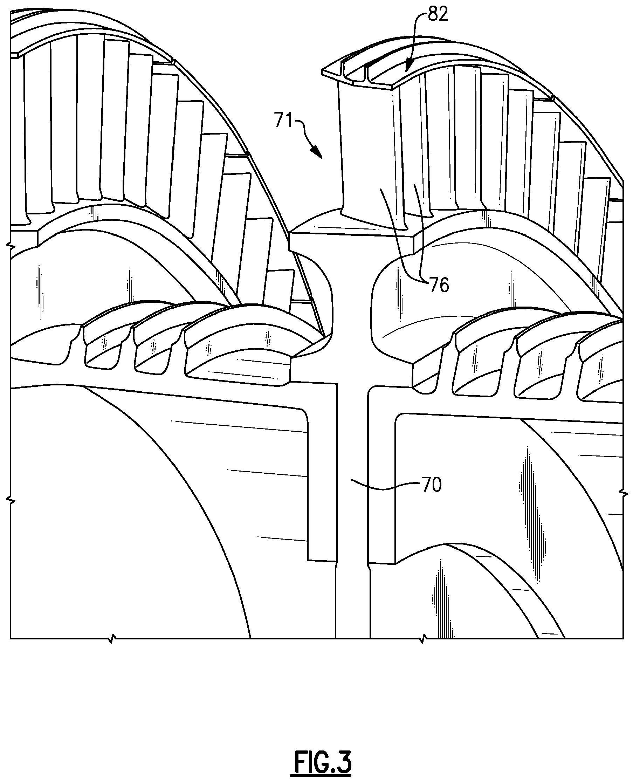

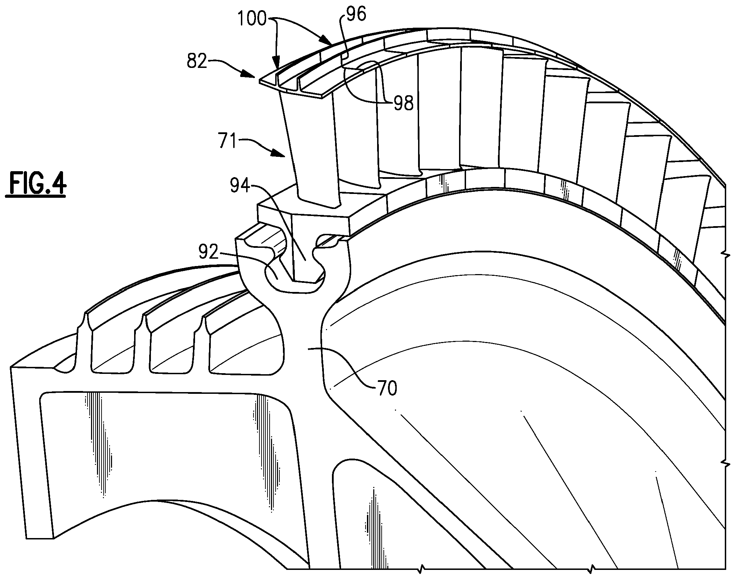

As shown in the example in Figure 3, the blades 71 are integrated with the rotor 70. In the example shown in Figure 4, roots 94 of the blades 71 are received in slots 92 in the rotor 70. The slots can be circumferential (shown) or axial.

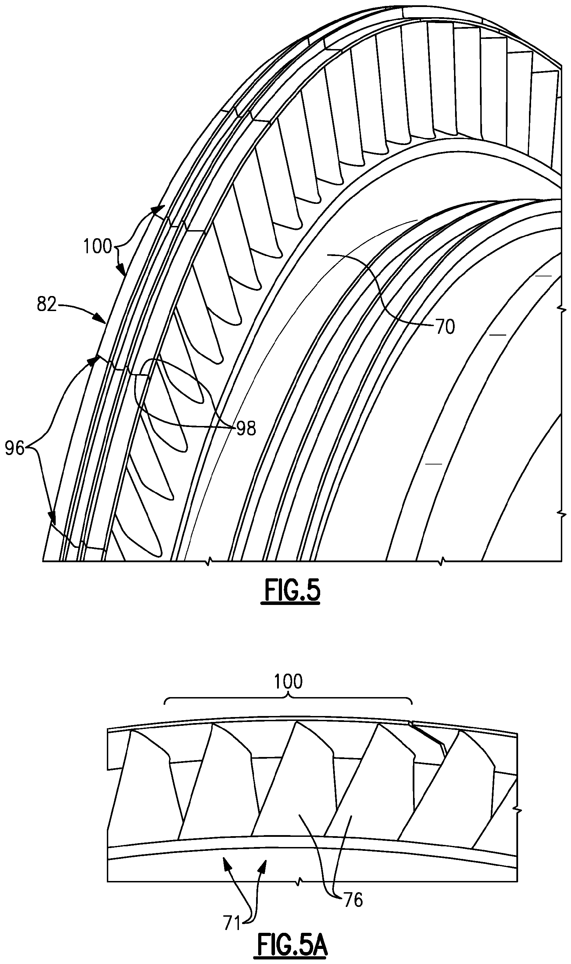

The shroud 82 provides a noncontiguous ring about the compressor stage. Multiple ring segments 100 are supported by the airfoils 76 and are arranged circumferentially about the axis A (Figure 1). Adjacent segments 100 included circumferential faces 98 separated by a nominal gap. Mechanical damping is provided by friction between the adjacent circumferential faces 98. In the example shown in Figure 4, discrete ring segments 100 are provided for each airfoil 71. In the example shown in Figures 5 and 5A, multiple blades 71 share a common ring segment 100.

Longer chord airfoils had resulted in longer compressors with their attendant increase in weight. The disclosed tip shrouded compressor stage allows airfoil aspect ratios to be increased without suffering the limitations of past high aspect ratio airfoils, stages and compressors. For example, compressors employing the disclosed compressor stage tip shrouded blades may perform better than modern designs using low aspect ratio airfoils. Improvements include shorter length and lower weight, higher efficiency, and/or improved stability.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A gas turbine engine compressor stage comprising:
a rotor (70);
compressor blades (71) supported by the rotor (70), the blades (71) include an inner flow path surface each supporting an airfoil that has a chord (80) extending radially along a span (78) to a tip, a shroud (82) supported at the tip and providing an outer flow path surface, wherein the shroud (82) provides a noncontiguous ring about the compressor stage; wherein the airfoils have an aspect ratio corresponding to the airfoil span to the airfoil chord, the shroud extends the full chord, wherein the aspect ratio is in a range of 1.6 to 2.8.

2. The compressor stage according to claim 1, wherein the shroud includes a sealing structure on a side of the shroud opposite of the outer flow path surface, and preferably wherein the sealing structure has labyrinth seals.

3. The compressor stage according to any preceding claim, wherein the blades each include a root received in a slot in the rotor.

4. The compressor stage according to any preceding claim, wherein the shroud includes ring segments circumferentially spaced apart from one another and separated by gaps, wherein multiple blades share a common ring segment.

5. The compressor stage according to any preceding claim, wherein the blades are integrated with the rotor.

6. A gas turbine engine comprising:
engine static structure;
first and second turbine sections rotatable about an axis relative to the engine static structure, wherein the first turbine section is arranged fluidly downstream from the second turbine section;
first and second compressor sections rotatable about the axis relative to the engine static structure, wherein the second compressor section is arranged fluidly downstream from the first compressor section, and one of the compressor sections has a predetermined number of compressor stages, and each compressor stage has compressor blades supported by a rotor, the blades include an inner flow path surface each supporting an airfoil that has a chord extending radially along a span to a tip, a shroud supported at the tip and providing an outer flow path surface and a sealing structure, the sealing structure configured to seal relative to the engine static structure; wherein the shroud is provided on each of the compressor stages within the one of the compressor sections; and
wherein the airfoils have an aspect ratio corresponding to the airfoil span to the airfoil chord, wherein the aspect ratio is in a range of 1.6 to 2.8.

7. The engine according to claim 6, wherein the first and second compressor sections are respectively low and high pressure compressor sections rotatable relative to one another about the axis, wherein the compressor stage is arranged in the high pressure compressor section.

8. The engine according to claims 6 or 7, wherein the engine static structure provides a core flow path and a bypass flow path, and comprising a fan arranged in the bypass flow path upstream from the core flow path, the first and second compressor sections and the second and first turbine section arranged in the core flow path.

9. The engine according to any of claims 6-8, wherein the sealing structure has labyrinth seals.

10. The engine according to any of claims 6-9, wherein the blades each include a root received in a slot in the rotor.

11. The engine according to any of claims 6-10, wherein the shroud includes ring segments circumferentially spaced apart from one another and separated by gaps, wherein multiple blades share a common ring segment.

12. The engine according to any of claims 6-11, wherein the blades are integrated with the rotor.

## Patentansprüche

1. Gasturbinenmotorverdichterstufe, umfassend:
einen Rotor (70);
Verdichterschaufeln (71), die von dem Rotor (70) getragen werden, wobei die Schaufeln (71) eine innere Strömungswegfläche beinhalten, die jeweils ein Schaufelblatt trägt, das eine Tiefe (80) aufweist, die sich radial entlang einer Spanne (78) zu einer Spitze erstreckt, wobei ein Mantel (82) an der Spitze getragen wird und eine äußere Strömungswegfläche bereitstellt, wobei der Mantel (82) einen nicht kontinuierlichen Ring um die Verdichterstufe bereitstellt; wobei die Schaufelblätter ein Aspektverhältnis aufweisen, das der Schaufelblattspanne zu der Schaufelblatttiefe entspricht, der Mantel sich über die volle Tiefe erstreckt, wobei das Aspektverhältnis in einem Bereich von 1,6 bis 2,8 liegt.

2. Verdichterstufe nach Anspruch 1, wobei der Mantel eine Dichtungsstruktur an einer Seite des Mantels gegenüber der äußeren Strömungswegfläche beinhaltet und wobei die Dichtungsstruktur vorzugsweise Labyrinthdichtungen aufweist.

3. Verdichterstufe nach einem der vorangehenden Ansprüche, wobei die Schaufeln jeweils einen Fuß beinhalten, der in einem Schlitz im Rotor aufgenommen ist.

4. Verdichterstufe nach einem der vorangehenden Ansprüche, wobei der Mantel Ringsegmente beinhaltet, die in Umfangsrichtung voneinander beabstandet und durch Spalte getrennt sind, wobei mehrere Schaufeln ein gemeinsames Ringsegment miteinander teilen.

5. Verdichterstufe nach einem der vorangehenden Ansprüche, wobei die Schaufeln mit dem Rotor integriert sind.

6. Gasturbinenmotor, umfassend:
eine statische Motorstruktur;
einen ersten und zweiten Turbinenabschnitt, die um eine Achse relativ zur statischen Motorstruktur drehbar sind, wobei der erste Turbinenabschnitt fluidisch stromabwärts von dem zweiten Turbinenabschnitt angeordnet ist;
einen ersten und zweiten Verdichterabschnitt, die um die Achse relativ zur statischen Motorstruktur drehbar sind, wobei der zweite Verdichterabschnitt fluidisch stromabwärts von dem ersten Verdichterabschnitt angeordnet ist und einer der Verdichterabschnitte eine vorgegebene Anzahl von Verdichterstufen aufweist, wobei jede Verdichterstufe Verdichterschaufeln aufweist, die von einem Rotor getragen werden, wobei die Schaufeln eine innere Strömungswegfläche, die jeweils ein Schaufelblatt trägt, das eine Tiefe aufweist, die sich radial entlang einer Spanne zu einer Spitze erstreckt, einen Mantel, der an der Spitze getragen wird und eine äußere Strömungswegfläche bereitstellt, und eine Dichtungsstruktur beinhalten, wobei die Dichtungsstruktur dazu konfiguriert ist, relativ zu der statischen Motorstruktur abzudichten; wobei der Mantel an jeder der Verdichterstufen in dem einen der Verdichterabschnitte vorgesehen ist; und
wobei die Schaufelblätter ein Aspektverhältnis aufweisen, das der Schaufelblattspanne zur Schaufelblatttiefe entspricht, wobei das Aspektverhältnis in einem Bereich von 1,6 bis 2,8 liegt.

7. Motor nach Anspruch 6, wobei der erste und zweite Verdichterabschnitt jeweils ein Nieder- und ein Hochdruckverdichterabschnitt sind, die relativ zueinander um die Achse drehbar sind, wobei die Verdichterstufe in dem Hochdruckverdichterabschnitt angeordnet ist.

8. Motor nach Anspruch 6 oder 7, wobei die statische Motorstruktur einen Kernströmungsweg und einen Bypassströmungsweg bereitstellt, und umfassend ein Gebläse, das in dem Bypassströmungsweg stromaufwärts von dem Kernströmungsweg angeordnet ist, wobei der erste und zweite Verdichterabschnitt und der erste und zweite Turbinenabschnitt in dem Kernströmungsweg angeordnet sind.

9. Motor nach einem der Ansprüche 6-8, wobei die Dichtungsstruktur Labyrinthdichtungen aufweist.

10. Motor nach einem der Ansprüche 6-9, wobei die Schaufeln jeweils einen Fuß beinhalten, der in einem Schlitz im Rotor aufgenommen ist.

11. Motor nach einem der Ansprüche 6-10, wobei der Mantel Ringsegmente beinhaltet, die in Umfangsrichtung voneinander beabstandet und durch Spalte getrennt sind, wobei mehrere Schaufeln ein gemeinsames Ringsegment miteinander teilen.

12. Motor nach einem der Ansprüche 6-11, wobei die Schaufeln mit dem Rotor integriert sind.

## Revendications

1. Étage de compresseur de moteur à turbine à gaz comprenant ;
un rotor (70) ;
des pales de compresseur (71) supportées par le rotor (70), les pales (71) comprennent une surface de chemin d'écoulement interne supportant chacune un profil aérodynamique qui a une corde (80) s'étendant radialement le long d'une étendue (78) vers une pointe, un carénage (82) supporté au niveau de la pointe et fournissant une surface de chemin d'écoulement externe, dans lequel le carénage (82) fournit un anneau non contigu autour de l'étage de compresseur ; dans lequel les profils aérodynamiques présentent un rapport d'aspect correspondant à l'étendue de profil aérodynamique vers la corde de profil aérodynamique, le carénage prolonge la corde complète, dans lequel le rapport d'aspect se trouve dans une plage de 1,6 à 2,8.

2. Étage de compresseur selon la revendication 1, dans lequel le carénage comprend une structure d'étanchéité sur un côté du carénage opposé à la surface de chemin d'écoulement externe, et de préférence dans lequel la structure d'étanchéité présente des joints à labyrinthe.

3. Étage de compresseur selon une quelconque revendication précédente, dans lequel les pales comprennent chacune une racine reçue dans une fente dans le rotor.

4. Étage de compresseur selon une quelconque revendication précédente, dans lequel le carénage comprend des segments annulaires espacés circonférentiellement entre eux et séparés par des espaces, dans lequel de multiples pales partagent un segment annulaire commun.

5. Étage de compresseur selon une quelconque revendication précédente, dans lequel les pales sont intégrées au rotor.

6. Moteur à turbine à gaz comprenant :
une structure statique de moteur ;
des première et seconde sections de turbine pouvant tourner autour d'un axe par rapport à la structure statique de moteur, dans lequel la première section de turbine est agencée de manière fluidique en aval de la seconde section de turbine ;
des première et seconde sections de compresseur pouvant tourner autour de l'axe par rapport à la structure statique de moteur, dans lequel la seconde section de compresseur est agencée de manière fluidique en aval de la première section de compresseur et l'une des sections de compresseur a un nombre prédéterminé d'étages de compresseur, et chaque étage de compresseur comporte des pales de compresseur supportées par un rotor, les pales comprennent une surface de chemin d'écoulement interne supportant chacune un profil aérodynamique qui a une corde s'étendant radialement le long d'une étendue vers une pointe, un carénage supporté au niveau de la pointe et fournissant une surface de chemin d'écoulement externe et une structure d'étanchéité, la structure d'étanchéité étant conçue pour assurer l'étanchéité par rapport à la structure statique de moteur ; dans lequel le carénage est disposé sur chacun des étages de compresseur dans l'une des sections de compresseur ; et
dans lequel les profils aérodynamiques présentent un rapport d'aspect correspondant à l'étendue de profil aérodynamique vers la corde de profil aérodynamique, dans lequel le rapport d'aspect se trouve dans une plage de 1,6 à 2,8.

7. Moteur selon la revendication 6, dans lequel les première et seconde sections de compresseur sont respectivement des sections de compresseur de faible et haute pressions pouvant tourner l'une par rapport à l'autre autour de l'axe, dans lequel l'étage de compresseur est agencé dans la section de compresseur de haute pression.

8. Moteur selon les revendications 6 ou 7, dans lequel la structure statique de moteur fournit un chemin d'écoulement primaire et un chemin d'écoulement secondaire, et comprenant un ventilateur agencé dans le chemin d'écoulement secondaire en amont du chemin d'écoulement primaire, les première et seconde sections de compresseur et les seconde et première sections de turbine agencées dans le chemin d'écoulement primaire.

9. Moteur selon l'une quelconque des revendications 6 à 8, dans lequel la structure d'étanchéité comporte des joints à labyrinthe.

10. Moteur selon l'une quelconque des revendications 6 à 9, dans lequel les pales comprennent chacune une racine reçue dans une fente dans le rotor.

11. Moteur selon l'une quelconque des revendications 6 à 10, dans lequel le carénage comprend des segments annulaires espacés circonférentiellement entre eux et séparés par des espaces, dans lequel de multiples pales partagent un segment annulaire commun.

12. Moteur selon l'une quelconque des revendications 6 à 11, dans lequel les pales sont intégrées au rotor.
